# EUROPÄISCHE PATENTANMELDUNG

(11) **EP 3 460 964 A1**
(43) Veröffentlichungstag der Anmeldung: **27.03.2019**
(21) Anmeldenummer: 17192737.9
(22) Anmeldetag: 22.09.2017
(51) Int. Cl.: H02K 15/08

(54) **NADELWICKELVORRICHTUNG UND NADELWICKELVERFAHREN**

(71) Anmelder: Aumann Espelkamp GmbH, 32339 Espelkamp (DE)
(72) Erfinder: LÜTTGE, WOLFGANG, 31787 Hameln (DE)
(74) Vertreter: Schober, Mirko

(57) **Zusammenfassung**

Eine Nadelwickelvorrichtung weist einen ersten Nadelwickler (10) auf, sowie einen Düsenkopf (300) mit einer Drahtauslassdüse (310). Der erste Nadelwickler (10) weist eine erste Düsenkopfaufnahme (131) auf, die den Düsenkopf (300) aufnehmen kann. Der erste Nadelwickler (10) ist dazu ausgelegt, einen Wickeldraht (40) an den Düsenkopf (300) zuzuführen. Die Nadelwickelvorrichtung weist einen zweiten Nadelwickler (20) auf, der eine zweite Düsenkopfaufnahme (231) aufweist, die den Düsenkopf (300) aufnehmen kann.

## Beschreibung

Die Erfindung betrifft eine Nadelwickelvorrichtung mit einem ersten Nadelwickler, einem Düsenkopf mit einer Drahtauslassdüse und einem Nadelwickelverfahren, bei welchem ein zu bewickelnder Körper mit einem Draht mittels einer derartigen Wickelvorrichtung bewickelt wird.

Bei der Bewicklung von innengenuteten Vollblechschnitten ist das Nadelwickelverfahren das einzige direktbewickelnde Verfahren. Die Drahtverlegung erfolgt durch einen Nadelwickelkopf, an dessen Ende sich eine Drahtführerdüse befindet. Aus dieser wird der Draht im 90°-Winkel abgezogen. Zur Bewicklung durchfährt die Nadel in einer ersten Hubbewegung die Nut bis sie auf der gegenüberliegenden Seite wieder aus der Nut austritt. Anschließend wird das in einer drehbaren Aufspannung fixierte Blechpaket entsprechend der gewünschten Sehnung gedreht und die Nadel in einer Reversierbewegung wieder auf die Startseite zurückgefahren. Nach dem Zurückschwenken des Blechpakets in die Ausgangsposition ist eine Windung fertig gewickelt.

Die Nadelwickeltechnik ist ausführlich beispielsweise in den Büchern "Handbuch der Wickeltechnik für hocheffiziente Spulen und Motoren" (Hagedorn, Sell-Le-Blanc, Fleischer; Springer Verlag, Berlin 2016, S.205) und "Handbuch Fügen, Handhaben und Montieren" (Feldkamp, Schoppner, Spur (Hrg.); Hanser Verlag, München 2014, S.219) beschrieben.

Ein Nadelwickler mit einem 90°-Schwenkkopf kann zwar Spulenkörper bewickeln, stößt aber an seine Grenzen, wenn Wickelhilfen eingesetzt werden, bei denen nicht eine einfache Sehne zwischen den Nuten gewickelt wird. Gerade wenn der Nadelwickler den Spulenkörper durchfährt, ist der Bewegungsraum in radialer Richtung begrenzt. Durch den Einsatz von Nadelwicklern mit einem Servo-Schwenkkopf, der ein Schwenken des Düsenkopfes senkrecht zur Hauptachse des Wickelkörpers erlaubt, kann auch bei verteilten Wicklungen mit Wickelhilfen gearbeitet werden. Anders sieht es auf der gegenüberliegenden Stirnseite aus. Durch die Integration des Schwenkmechanismus erhöht sich der Durchmesser des Nadelwicklers, wodurch sich die Beweglichkeit in radialer Richtung nach dem Durchfahren des Wickelkörpers verringert. Zwar kann der Düsenkopf verschwenkt werden, doch kann er auf dieser Seite nicht den gesamten Freiraum der Stirnseite erreichen. Gerade Wickelhilfen mit Drahtführungsnuten, die radial nach außen geöffnet sind, können auf dieser Seite nicht mit dem Nadelwickler erreicht werden.

Aufgabe der Erfindung ist es, eine Nadelwickelvorrichtung zur Verfügung zu stellen, mit der der gesamte Raum im Bereich der Stirnseiten des Wickelkörpers erreicht werden kann, so dass ein Wickelkörper mit jeder Form von Wickelhilfe automatisch mit einem Nadelwickler bewickelt werden kann.

Gelöst wird diese Aufgabe zum einen mit einer Nadelwickelvorrichtung mit den Merkmalen des Anspruchs 1, zum anderen durch ein Nadelwickelverfahren mit den Merkmalen des Anspruchs 10.

Dabei handelt es sich um eine Nadelwickelvorrichtung mit einem ersten Nadelwickler, einem Düsenkopf mit einer Drahtauslassdüse, wobei der erste Nadelwickler eine erste Düsenkopfaufnahme aufweist, die den Düsenkopf aufnehmen kann, und wobei der erste Nadelwickler dazu ausgelegt ist, wenigstens einen Wickeldraht an den Düsenkopf zuzuführen. Weiterhin weist die Nadelwickelvorrichtung einen zweiten Nadelwickler auf, der eine zweite Düsenkopfaufnahme aufweist, die den Düsenkopf aufnehmen kann. Durch die Verwendung von zwei Nadelwicklern, zwischen denen der Düsenkopf übergeben werden kann, besitzt die Nadelwickelvorrichtung eine größere Bewegungsfreiheit, die nicht durch die Begrenzung des inneren Freiraums des zu bewickelnden Körpers eingeschränkt wird.

In einer bevorzugten Ausführungsform weist die Nadelwickelvorrichtung eine Aufnahmevorrichtung auf, in die ein zu bewickelnder Körper, insbesondere ein Statorkörper, aufgenommen werden kann oder aufgenommen ist, wobei die Aufnahmevorrichtung für den zu bewickelnden Körper zwischen dem ersten Nadelwickler und dem zweiten Nadelwickler angeordnet ist.

Durch die Verwendung von zwei Nadelwickelern, zwischen denen der zu bewickelnde Körper angeordnet wird, besitzt die Nadelwickelvorrichtung eine große Bewegungsfreiheit an beiden Stirnseiten des zu bewickelnden Körpers. Jeder der Nadelwickler bewickelt den zu bewickelnden Körper auf der ihm zugewandten Stirnseite und kann die gebotenen Freiräume ausnutzen, ohne dass der Nadelwickler in seiner Bewegungsfreiheit eingeschränkt wird, die durch das Durchgreifen durch den zu bewickelnden Körper bei konventionellen Nadelwicklern entstehen würde. Damit können beispielsweise auch Körper bewickelt werden, die eine Wickelhilfe tragen, deren Drahtführungsnuten radial nach außen hin geöffnet sind.

In einer weiteren bevorzugten Ausführungsform der Nadelwickelvorrichtung weist der erste Nadelwickler einen ersten Wickelarm auf, an dessen freiem Ende die erste Düsenkopfaufnahme angeordnet ist, und/oder der zweite Nadelwickler weist einen zweiten Wickelarm auf, an dessen freiem Ende die zweite Düsenkopfaufnahme angeordnet ist.

In einer besonders bevorzugten Ausführungsform sind der erste Wickelarm und/oder der zweite Wickelarm so bemessen, dass er/sie durch den Innenraum des zu bewickelnden Körpers, insbesondere Statorkörpers, hindurchgeführt werden kann/können. Damit ist sichergestellt, dass der Draht beim Wickeln durch das Innere des zu wickelnden Körpers hindurch geführt werden kann. Hierbei ist es in das Belieben des Fachmanns gestellt, ob der erste Wickelarm oder der zweite Wickelarm diesen Teil der Wicklung übernimmt. Bevorzugt wird die Möglichkeit, dass beide Wickelarme durch den zu wickelnden Körper hindurchgreifen können, was die Flexibilität der Vorrichtung erhöht.

In einer sehr bevorzugten Ausführungsform weist der Düsenkopf Schwenklager auf, die in entsprechende Lagerschalen der ersten oder zweiten Düsenkopfaufnahme aufnehmbar sind. Mit einem Schwenklager kann der Düsenkopf lösbar mit einer der beiden Düsenkopfaufnahmen verbunden werden.

Von Vorteil dabei ist, wenn die beiden Nadelwickler so verfahrbar sind, dass die beiden Düsenkopfaufnahmen benachbart zueinander liegen. Diese Anordnung ermöglicht eine direkte Übergabe des Düsenkopfes von einer Düsenkopfaufnahme zur anderen, ohne eine zusätzliche separate Übergabeeinheit zu benötigen.

In einer ganz besonders bevorzugten Ausführungsform weist die Nadelwickelvorrichtung eine Transfereinrichtung auf, die das Entkoppeln des Düsenkopfes von der einen Düsenkopfaufnahme und das Koppeln des Düsenkopfes mit der jeweils anderen Düsenkopfaufnahme ermöglicht. Diese Transfereinrichtung verhindert, dass der Düsenkopf bei der Übergabe frei und ungesichert ist, was die Produktionssicherheit beeinträchtigen könnte, da die Übergabe bevorzugt während des Nadelwickelprozesses erfolgt. Bevorzugt weist die Transfereinrichtung erste Haltvorsprünge auf, die dazu ausgelegt sind, den Düsenkopf in der ersten Düsenkopfaufnahme zu halten, und zweite Haltevorsprünge, die dazu ausgelegt sind, den Düsenkopf in der zweiten Düsenkopfaufnahme zu halten. Von Vorteil ist es, die ersten Haltevorsprünge und die zweiten Haltevorsprünge als Teile einer Fixierung nach Art eines Bajonettverschlusses ausgebildet sind.

Gelöst wird die gestellte Aufgabe ebenfalls durch ein Nadelwickelverfahren, bei welchem ein zu bewickelnder Körper, insbesondere ein Statorkörper, mit einem Draht, insbesondere mit verteilten Wicklungen, mit einer Wickelvorrichtung nach der oben beschriebenen Art bewickelt wird, wobei der Düsenkopf wenigstens einmal von einem Nadelwickler an den anderen Nadelwickler übergeben wird.

Bevorzugt kann dabei vorgesehen sein, dass vor der Übergabe des Düsenkopfes von einem Nadelwickler an den anderen Nadelwickler beide Nadelwickler in eine Übergabestellung gefahren werden, in der die Düsenkopfaufnahmen beider Nadelwickler benachbart zueinander liegen oder ineinander greifen. Dadurch, dass die beiden Düsenkopfaufnahmen benachbart zueinander liegen oder ineinander greifen, wird sichergestellt, dass die Übergabe des Düsenkopfes direkt erfolgen kann und der Düsenkopf bei der Übergabe immer gesichert ist. Dies ermöglicht insbesondere eine Übergabe im laufenden Betrieb der Vorrichtung.

In einem besonders bevorzugten Verfahren erfolgt die Übergabe des Düsenkopfes im Innern des zu bewickelnden Körpers. Damit ist der Übergabepunkt durch den zu bewickelnden Körper geschützt. Es ist allerdings auch denkbar, dass die Übergabe an der Stirnseite des zu wickelnden Körpers erfolgt, die dem zweiten Nadelwickler zugewandt ist, wenn die Drahtzuführung durch den ersten Nadelwickler erfolgt. Um die freie Beweglichkeit des zweiten Nadelwicklers zu ermöglichen, muss sich die Drahtzuführung zum Drahtwickelkopf auf der zu bewickelnden Seite des zu bewickelnden Körpers bzw. Wickelkörpers befinden, so dass der erste Wickelarm durch das Innere des zu bewickelnden Körpers durchgreifen muss.

Mit einer derartigen Wickelvorrichtung wird ein Nadelwickelverfahren geschaffen, das eine große Flexibilität ermöglicht und insbesondere die Bewicklung an Stellen zulässt, die mit einem einzelnen Nadelwickler nicht erreichbar sind. Zudem kann die Übergabe des Düsenkopfes im laufenden Wickelprozess erfolgen, sodass dadurch auch keine Zeit verloren geht.

Die Erfindung wird nachfolgend anhand eines Ausführungsbeispiels näher erläutert.
- Figur 1 -: zeigt eine Seitenansicht einer erfindungsgemäßen Nadelwickelvorrichtung,
- Figur 2 -: zeigt zwei Wickelarme, bei denen sich die Düsenkopfaufnahmen beabstandet gegenüberstehen, und dazwischen einen Düsenkopf in seitlicher Ansicht,
- Figur 3 -: zeigt ein Schnittbild sich gegenüberstehender Wickelarme, deren Schnitt in einer Ebene senkrecht zur Zeichenebene der Figur 2 liegt,
- Figuren 4 bis 6 -: zeigen drei Stadien eines Übergabevorgangs,
- Figur 7 -: zeigt verschiede Bewicklungssituationen.

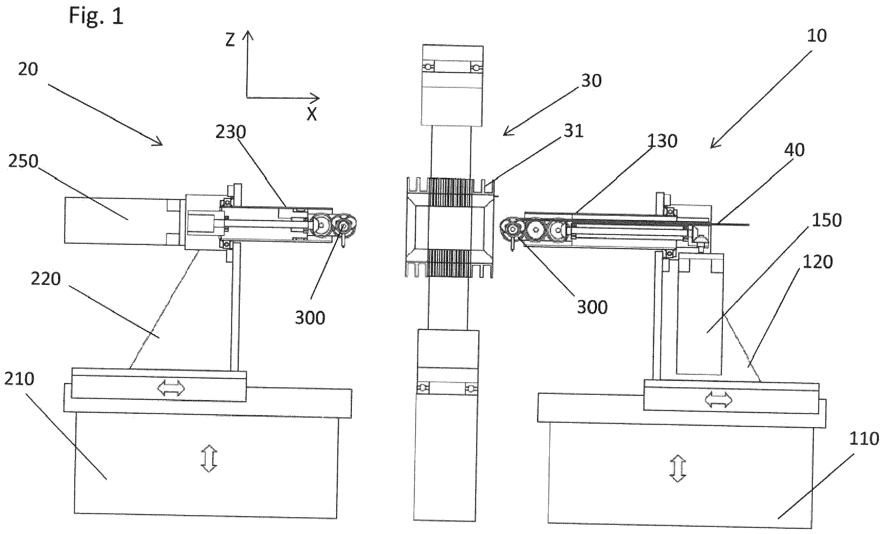

Figur 1 zeigt eine Nadelbewicklungsvorrichtung mit zwei Nadelwicklern 10, 20, zwischen denen ein zu bewickelnder Körper 31 angeordnet ist, der in einer Aufnahmevorrichtung 30 eingespannt ist. Die Aufnahmevorrichtung 30 ist bevorzugt eine Dreheinheit und hält den zu bewickelnden Körper 31 mittels einer Spannvorrichtung, z. B. eines Dreibackenfutters, fest. Es können allerdings auch andere Aufnahmevorrichtungen verwendet werden. Der Wickelarm 130, 230 ist in dieser Ausführungsform jeweils an einem horizontalen Schlitten 120, 220 montiert, der wiederum auf einem vertikalen Schlitten 110, 210 montiert ist. Des Weiteren ist jeder Nadelwickler 10, 20 mit einem Antrieb 150, 250 zum Schwenken des Düsenkopfes 300 ausgestattet. Der eine (im gezeigten Beispiel der rechte) Nadelwickler 10 ist zusätzlich mit der Führung eines Wickeldrahts 40 ausgestattet. In der Figur ist am freien Ende jedes Wickelarms 130, 230 jeweils ein Düsenkopf 300 dargestellt. Die Nadelwickelvorrichtung ist allerdings so ausgelegt, dass sie mit einem einzigen Düsenkopf 300 das erfindungsgemäße Nadelwickelverfahren durchführen kann.

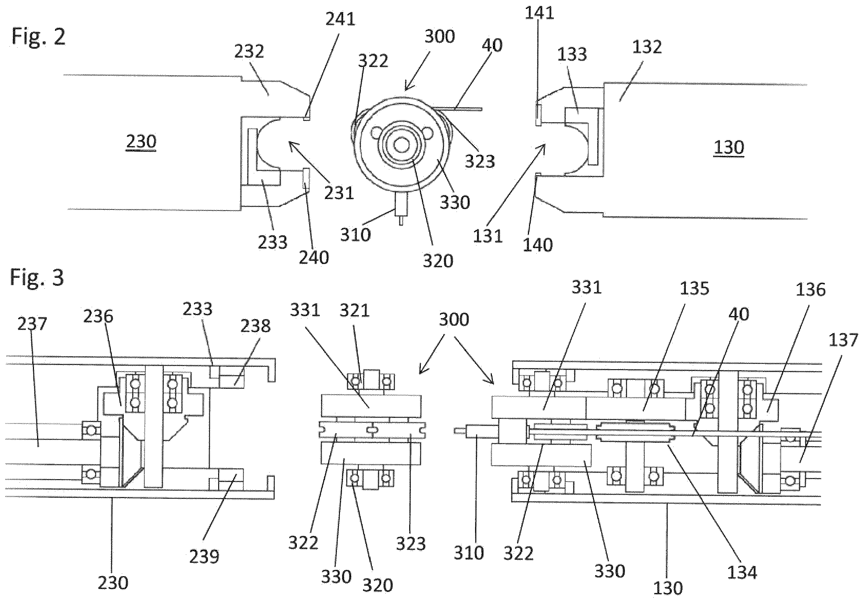

Figur 2 zeigt zwei Wickelarme 130, 230, bei denen sich die Düsenkopfaufnahmen 131, 231 gegenüberstehen. Jeder Wickelarm 130, 230 ist mit einem Schaltelement, im gezeigten Bespiel bevorzugt einer Schalthülse 132, 232, umgeben, mit der der hier gezeigte Bajonettverschluss 140, 141, 240, 241 durch Drehen des Schaltelements 132, 232 geöffnet bzw. verriegelt werden kann. Der Verschluss wird durch die Haltevorsprünge 140, 141 bzw. 240, 241 gebildet. Im hinteren Teil der Düsenaufnahme 131, 231 ist eine Freimachung 133, 233 integriert, die bei der Übergabe an den Haltevorsprüngen 140, 141 bzw. 240, 241 des gegenüberliegenden Bajonettverschlusses anliegen und die Verschlüsse gemeinsam drehen. Der Antrieb der Schaltelemente 132, 232 ist beliebig. Vorteilhaft ist ein pneumatischer Drehantrieb. Der Antrieb kann allerdings auch elektrisch, hydraulisch oder magnetisch erfolgen. Die hier gezeigten Verschlüsse sind in der Zeichnung beide offen, die Haltevorsprünge 140, 141, 240, 241 halten den Düsenkopf 300 nicht fest.

Zwischen den Wickelarmen 130, 230 ist der Düsenkopf 300 gezeigt, dem von rechts (nur angedeutet) der Wickeldraht 40 zugeführt wird. Dieser Wickeldraht 40 wird über die Umlenkrollen 322, 323 der Drahtauslassdüse 310 zugeführt. Der Düsenkopf 300 ist weiter mit Schwenklagern 320, 321 ausgestattet, von denen in der gezeigten Ansicht nur eines dargestellt ist. Zwischen den Schwenklagern sind zwei Winkelstellräder 330, 331 angeordnet, zwischen denen die Umlenkrollen 322, 323 (über die der Draht 40 geführt ist) und die Drahtauslassdüse 310, aus der der Draht 40 zugeführt wird, angeordnet ist.

Figur 3 zeigt ein Schnittbild durch die Wickelarme 130, 230, wobei der Blickwinkel gegenüber der Ansicht in Figur 2 um 90° gedreht ist. Rechts ist der erste Wickelarm 130 dargestellt. In dieser Darstellung ist ein Düsenkopf 300 an dem Wickelarm 130 angeordnet. Verstellt wird der Kopf 300 durch einen Antrieb zum Schwenken 150 (hier nicht gezeigt). Über, bevorzugt zwei, Winkelzahnräder wird die Bewegung der Antriebswelle 137 auf ein Stirnzahnrad 136 übertragen. Diese Drehbewegung wird über ein Zwischenrad 135 auf das Winkelstellrad 331 übertragen, das die Drahtauslassdüse 310 ausrichtet. Auf der Achse, an der das Zwischenzahnrad 135 gelagert ist, wird eine Umlenkrolle 134 separat gelagert. Über diese Umlenkrolle wird der Wickeldraht 40 zu den Umlenkrollen 322, 323 des Düsenkopfs 300 und von dort aus durch die Drahtauslassdüse 310 geführt.

Mittig in der Figur 3 ist ein Düsenkopf 300 gezeigt, bei dem die Drahtauslassdüse 310 in die Zeichenebene hinein gerichtet ist. Die beiden Umlenkrollen 322, 323 sind zwischen zwei Winkelstellrädern 330, 331 angeordnet. Außen an den Winkelstellrädern 322, 323 sind die Schwenklager 320, 321 angeordnet.

Auf der in der Zeichnung linken Seite ist der zweite Wickelarm 230 dargestellt. Die Bewegung des Stellantriebs 250 (hier nicht gezeigt) wird über die Antriebswelle 237 und, bevorzugt zwei Winkelzahnräder, auf das Stirnzahnrad 236 geleitet. Wird nun der Düsenkopf 300 in die Düsenkopfaufnahme 231 so eingelegt, dass die Schwenklager 320, 321 in den Lagerschalen 238, 239 liegen, kommt das Winkelstellrad 331 mit dem Stirnzahnrad 236 in Kontakt und kann die Schwenkbewegungen des Antriebs ausführen.

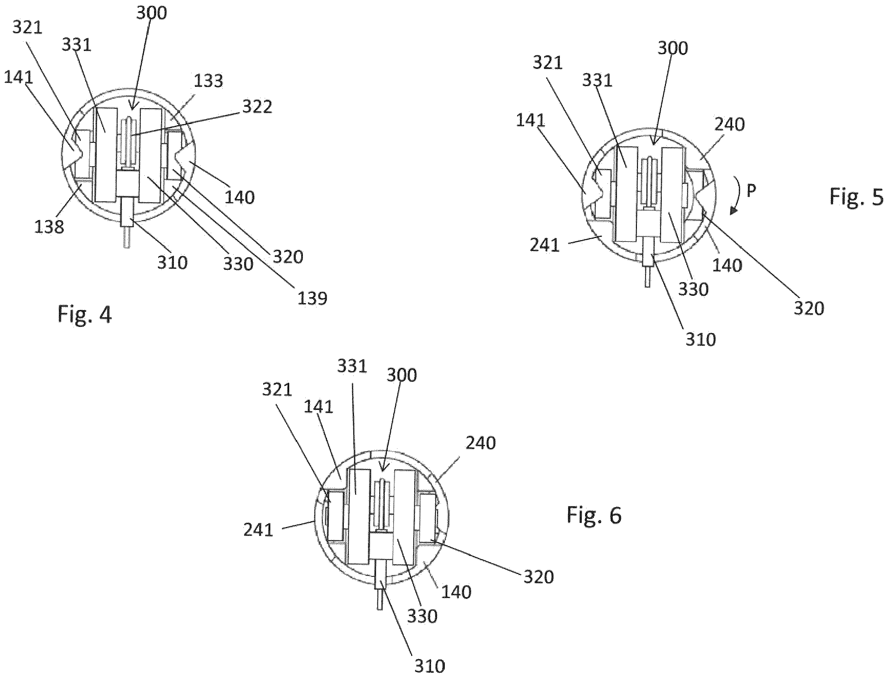

Mit den Figuren 4 bis 6 wird ein Übergabevorgang beschrieben. Diese Übergabe wird aus der zweiten Düsenkopfaufnahme heraus gezeigt. Die Ausgangssituation der Figur 4 ist der an dem ersten Wickelarm 10 fixierte Düsenkopf 300. Die Schwenklager 320, 321 sind im hinteren Teil an den Lagerschalen 138, 139 gelagert und nach vorne mit den Haltevorsprüngen 140, 141 fixiert. Die Freimachung 133 ist oberhalb des Haltevorsprungs 140 hinter dem Schwenklager 320 angeordnet.

In Figur 5 ist die Zusammenführung der beiden Wickelarme 130, 230 gezeigt. In der Darstellung sind die beiden Haltevorsprünge 240, 241 des zweiten Wickelarms 230 dargestellt; dabei ist der eine Haltevorsprung 241 unterhalb des Haltevorsprungs 141 geführt, der andere Haltevorsprung 240 oberhalb des Haltevorsprungs 140. Die Haltevorsprünge 240, 241 werden an dem Düsenkopf 300 vorbeigeführt, bis sie in einer Ebene unmittelbar hinter den Schwenklagern 320, 321 angelangt sind. Hierbei liegen die beiden Lagerschalen 238, 239 vorne an den Schwenklagern 320, 321 an (nicht gezeigt). Die Schalthülsen 132, 232 drehen die Haltevorsprünge 140, 141, 240, 241 in Uhrzeigerrichtung P. Dabei geben die Haltevorsprünge 140, 141 die Schwenklager 320, 321 frei und die Haltevorsprünge 240, 241 fixieren die Schwenklager 320, 321 von hinten, wie es die Figur 6 zeigt. Bewegen sich die beiden Wickelarme 130, 230 auseinander, gibt der erste Wickelarm 130 den Düsenkopf 300 frei und der zweite Wickelarm 230 hält ihn fest.

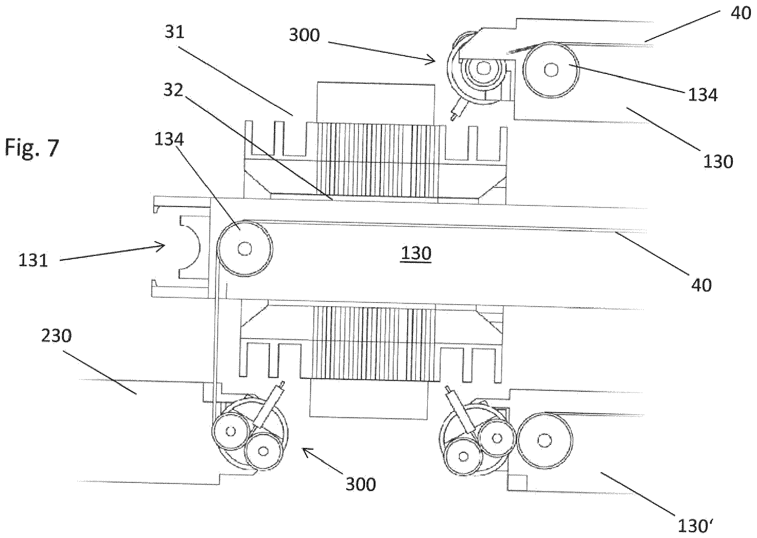

Die Figur 7 zeigt drei Wickelsituationen. Rechts oben ist ein erster Wickelarm 130 gezeigt, bei dem der Wickeldraht 40 über eine Umlenkrolle 134 zum Düsenkopf 300 geführt wird. Der Draht 40 (nicht gezeigt) wird z. B. in eine radial nach außen geöffnete Drahtführungsnut einer an dem zu bewickelnden Körper 31 angebrachte Wickelhilfe gelegt. Rechts unten wird die gleiche Situation auf der anderen Seite des Körpers gezeigt. Auf der linken Seite ist die Situation so, dass der Düsenkopf 300 dem zweiten Wickelarm 230 übergeben worden ist. Der erste Wickelarm 130 ist so weit durch das Innere 32 des zu bewickelnden Körpers 31 geführt, dass der von der Umlenkrolle 134 kommende Wickeldraht 40 frei bis zu den Umlenkrollen 322, 323 des Düsenkopfes 300 geführt wird.

Dadurch, dass der Wickelarm 130 nicht mehr den zu bewickelnden Körper 31 durch das Innere 32 hindurch umfassen muss, weil der Düsenkopf 300 einfach an den zweiten Wickelarm 230 übergeben wird, kann der Aufbau des einzelnen Wickelarms 130, 230 einfacher gestaltet und dadurch mit geringerem Querschnitt gebaut werden. So kann mit einem Außendurchmesser des Wickelarms 130, 230 von maximal 45 mm ein Stator 31 mit einem Innendurchmesser von mindestens 50 mm mit einem Wickeldraht 40 von bis zu 1mm Stärke gewickelt werden. Der Aufbau der Nadelwickelvorrichtung kann durchaus auch filigraner sein, was auch bei kleineren Statorinnendurchmessern Anwendung finden kann. Es ist allerdings auch möglich, den Aufbau stabiler und größer auszuführen, um größere Statoren bewickeln zu können.

## Patentansprüche

1. Nadelwickelvorrichtung mit einem ersten Nadelwickler (10) sowie einem Düsenkopf (300) mit einer Drahtauslassdüse (310), wobei der erste Nadelwickler (10) eine erste Düsenkopfaufnahme (131) aufweist, die den Düsenkopf (300) aufnehmen kann, und wobei der erste Nadelwickler (10) dazu ausgelegt ist, einen Wickeldraht (40) an den Düsenkopf (300) zuzuführen,
**dadurch gekennzeichnet,**
**dass** die Nadelwickelvorrichtung einen zweiten Nadelwickler (20) aufweist, der eine zweite Düsenkopfaufnahme (231) aufweist, die den Düsenkopf (300) aufnehmen kann.

2. Nadelwickelvorrichtung nach Anspruch 1,
**dadurch gekennzeichnet,**
**dass** sie eine Aufnahmevorrichtung (30) aufweist, in die ein zu bewickelnder Körper (31), insbesondere ein Statorkörper, aufgenommen werden kann oder aufgenommen ist, wobei die Aufnahmevorrichtung (30) für den zu bewickelnden Körper (30) zwischen dem ersten Nadelwickler (10) und dem zweiten Nadelwickler (20) angeordnet ist.

3. Nadelwickelvorrichtung nach einem der vorigen Ansprüche,
**dadurch gekennzeichnet,**
**dass** der erste Nadelwickler (10) einen ersten Wickelarm (130) aufweist, an dessen freiem Ende die erste Düsenkopfaufnahme (131) angeordnet ist und/oder zweite Nadelwickler (20) einen zweiten Wickelarm (230) aufweist, an dessen freiem Ende die zweite Düsenkopfaufnahme (231) angeordnet ist.

4. Nadelwickelvorrichtung nach Anspruch 3,
**dadurch gekennzeichnet,**
**dass** der erste Wickelarm (130) und/oder der zweite Wickelarm (230) so bemessen sind, dass er/sie durch den Innenraum (32) des zu bewickelnden Körpers (30), insbesondere Statorkörpers, hindurchgeführt werden können.

5. Nadelwickelvorrichtung nach einem der vorigen Ansprüche,
**dadurch gekennzeichnet,**
**dass** der Düsenkopf (300) Schwenklager (320, 321) aufweist, die in entsprechende Lagerschalen (138, 139; 238, 239) der ersten oder zweiten Düsenkopfaufnahme (131; 231) aufnehmbar sind.

6. Nadelwickelvorrichtung nach einem der vorigen Ansprüche,
**dadurch gekennzeichnet,**
**dass** die beiden Nadelwickler (10, 20) so verfahrbar sind, dass die beiden Düsenkopfaufnahmen (131, 231) benachbart zueinander liegen.

7. Nadelwickelvorrichtung nach einem der vorigen Ansprüche,
**dadurch gekennzeichnet,**
**dass** die Nadelwickelvorrichtung eine Transfereinrichtung (140, 141; 240, 241) aufweist, die das Entkoppeln des Düsenkopfes (300) von der einen Düsenkopfaufnahme (131) und das Koppeln des Düsenkopfes (300) mit der jeweils anderen Düsenkopfaufnahme (231) ermöglicht.

8. Nadelwickelvorrichtung nach Anspruch 7,
**dadurch gekennzeichnet,**
**dass** die Transfereinrichtung (140, 141; 240, 241) erste Haltevorsprünge (140, 141) aufweist, die dazu ausgelegt sind, den Düsenkopf (300) in der ersten Düsenkopfaufnahme (131) zu halten, und zweite Haltevorsprünge (240, 241) aufweist, die dazu ausgelegt sind, den Düsenkopf (300) in der zweiten Düsenkopfaufnahme (231) zu halten.

9. Nadelwickelvorrichtung nach Anspruch 8,
**dadurch gekennzeichnet,**
**dass** die ersten Haltevorsprünge (140, 141) und die zweiten Haltevorsprünge (240, 241) als Teile eines Bajonettverschlusses ausgebildet sind.

10. Nadelwickelverfahren, bei welchem ein zu bewickelnder Körper (31) insbesondere ein Statorkörper, mit einem Draht (40), insbesondere mit verteilten Wicklungen, mit einer Wickelvorrichtung nach einem der vorigen Ansprüche bewickelt wird, wobei der Düsenkopf (300) wenigstens einmal vom einen Nadelwickler (10) an den anderen Nadelwickler (20) übergeben wird.

11. Nadelwickelverfahren nach Anspruch 10,
**dadurch gekennzeichnet,**
**dass** vor der Übergabe vom einen Nadelwickler (10) an den anderen Nadelwickler (20) beide Nadelwickeler (10, 20) in eine Übergabestellung gefahren werden, in der die Düsenkopfaufnahmen (131, 231) beider Nadelwickler (10, 20) benachbart zueinander liegen oder ineinander greifen.

12. Nadelwickelverfahren nach Anspruch 10 oder 11,
**dadurch gekennzeichnet,**
**dass** die Übergabe des Düsenkopfes (10) im Innern (32) des zu bewickelnden Körpers (31) erfolgt.

## Geänderte Patentansprüche

### Geänderte Patentansprüche gemäss Regel 137(2) EPÜ.

1. Nadelwickelvorrichtung mit einem ersten Nadelwickler (10) sowie einem Düsenkopf (300) mit einer Drahtauslassdüse (310), wobei der erste Nadelwickler (10) eine erste Düsenkopfaufnahme (131) aufweist, die den Düsenkopf (300) aufnehmen kann, und wobei der erste Nadelwickler (10) dazu ausgelegt ist, einen Wickeldraht (40) an den Düsenkopf (300) zuzuführen, wobei die Nadelwickelvorrichtung einen zweiten Nadelwickler (20) aufweist, der eine zweite Düsenkopfaufnahme (231) aufweist, die den Düsenkopf (300) aufnehmen kann,
**dadurch gekennzeichnet,**
**dass** die Nadelwickelvorrichtung eine Transfereinrichtung (140, 141; 240, 241) aufweist, die das Entkoppeln des Düsenkopfes (300) von der einen Düsenkopfaufnahme (131) und das Koppeln des Düsenkopfes (300) mit der jeweils anderen Düsenkopfaufnahme (231) ermöglicht.

2. Nadelwickelvorrichtung nach Anspruch 1,
**dadurch gekennzeichnet,**
**dass** sie eine Aufnahmevorrichtung (30) aufweist, in die ein zu bewickelnder Körper (31), insbesondere ein Statorkörper, aufgenommen werden kann oder aufgenommen ist, wobei die Aufnahmevorrichtung (30) für den zu bewickelnden Körper (30) zwischen dem ersten Nadelwickler (10) und dem zweiten Nadelwickler (20) angeordnet ist.

3. Nadelwickelvorrichtung nach einem der vorigen Ansprüche,
**dadurch gekennzeichnet,**
**dass** der erste Nadelwickler (10) einen ersten Wickelarm (130) aufweist, an dessen freiem Ende die erste Düsenkopfaufnahme (131) angeordnet ist und/oder zweite Nadelwickler (20) einen zweiten Wickelarm (230) aufweist, an dessen freiem Ende die zweite Düsenkopfaufnahme (231) angeordnet ist.

4. Nadelwickelvorrichtung nach Anspruch 3,
**dadurch gekennzeichnet,**
**dass** der erste Wickelarm (130) und/oder der zweite Wickelarm (230) so bemessen sind, dass er/sie durch den Innenraum (32) des zu bewickelnden Körpers (30), insbesondere Statorkörpers, hindurchgeführt werden können.

5. Nadelwickelvorrichtung nach einem der vorigen Ansprüche,
**dadurch gekennzeichnet,**
**dass** der Düsenkopf (300) Schwenklager (320, 321) aufweist, die in entsprechende Lagerschalen (138, 139; 238, 239) der ersten oder zweiten Düsenkopfaufnahme (131; 231) aufnehmbar sind.

6. Nadelwickelvorrichtung nach einem der vorigen Ansprüche,
**dadurch gekennzeichnet,**
**dass** die beiden Nadelwickler (10, 20) so verfahrbar sind, dass die beiden Düsenkopfaufnahmen (131, 231) benachbart zueinander liegen.

7. Nadelwickelvorrichtung nach Anspruch 6,
**dadurch gekennzeichnet,**
**dass** die Transfereinrichtung (140, 141; 240, 241) erste Haltevorsprünge (140, 141) aufweist, die dazu ausgelegt sind, den Düsenkopf (300) in der ersten Düsenkopfaufnahme (131) zu halten, und zweite Haltevorsprünge (240, 241) aufweist, die dazu ausgelegt sind, den Düsenkopf (300) in der zweiten Düsenkopfaufnahme (231) zu halten.

8. Nadelwickelvorrichtung nach Anspruch 7,
**dadurch gekennzeichnet,**
**dass** die ersten Haltevorsprünge (140, 141) und die zweiten Haltevorsprünge (240, 241) als Teile eines Bajonettverschlusses ausgebildet sind.

9. Nadelwickelverfahren, bei welchem ein zu bewickelnder Körper (31), insbesondere ein Statorkörper, mit einem Draht (40), insbesondere mit verteilten Wicklungen, mit einer Wickelvorrichtung nach dem Oberbegriff des Anspruchs 1 oder nach einem der vorigen Ansprüche bewickelt wird, **dadurch gekennzeichnet, dass** der Düsenkopf (300) wenigstens einmal vom einen Nadelwickler (10) an den anderen Nadelwickler (20) übergeben wird.

10. Nadelwickelverfahren nach Anspruch 9,
**dadurch gekennzeichnet,**
**dass** vor der Übergabe vom einen Nadelwickler (10) an den anderen Nadelwickler (20) beide Nadelwickeler (10, 20) in eine Übergabestellung gefahren werden, in der die Düsenkopfaufnahmen (131, 231) beider Nadelwickler (10, 20) benachbart zueinander liegen oder ineinander greifen.

11. Nadelwickelverfahren nach Anspruch 9 oder 10,
**dadurch gekennzeichnet,**
**dass** die Übergabe des Düsenkopfes (10) im Innern (32) des zu bewickelnden Körpers (31) erfolgt.
